# EUROPÄISCHE PATENTSCHRIFT

(11) **EP 2 377 372 B1**
(45) Veröffentlichungstag und Bekanntmachung des Hinweises auf die Patenterteilung: **25.04.2018**
(21) Anmeldenummer: 10700724.7
(22) Anmeldetag: 07.01.2010
(51) Int. Cl.: H05B 41/285

(54) **VERFAHREN, BETRIEBSGERÄT UND BELEUCHTUNGSSYSTEM**
METHOD, DEVICE AND LIGHTING SYSTEM
MÉTHODE, APPAREIL ET SYSTÈME D'ÉCLAIRAGE

(30) Priorität: 09.01.2009 DE 102009004174; 20.02.2009 DE 102009009915
(43) Veröffentlichungstag der Anmeldung: 19.10.2011
(73) Patentinhaber: Tridonic GmbH & Co KG, 6851 Dornbirn (AT)
(72) Erfinder: NG, Chong, Tyne and Wear NE10 9DF (GB); DALBY, Paul, Cleveland TS5 7LP (GB); KELLY, Jamie, Tyne and Wear NE29 8AH (GB)
(74) Vertreter: Rupp, Christian
(86) Internationale Anmeldenummer: PCT/EP2010/050094
(87) Internationale Veröffentlichungsnummer: WO 2010/079190

(56) Entgegenhaltungen:
- EP-A2- 1 776 000
- US-A1- 2003 206 426
- US-A1- 2006 002 159
- US-A1- 2006 006 811
- US-A1- 2006 132 997

## Beschreibung

Die vorliegende Erfindung bezieht sich auf Betriebsgeräte für Leuchtmittel, insbesondere für Gasentladungslampen, LEDs oder OLEDs, sowie auf ein Beleuchtungssystem.

Die Druckschrift EP 1 776 000 A2 offenbart eine 8-Pin-PFC und ein Vorschaltgerätesteuer-IC, die Druckschrift US 2006/006811 A1 offenbart ein Vorschaltgerätesteuer-IC für eine Leuchtstofflampe, die Druckschrift US 2003/0206426 A1 offenbart eine Inverter-Steuerung und die Druckschrift US 2006/0132997 A1 offenbart eine Vorrichtung und ein Verfahren für einen Überspannungs- und Überstrom-Schutz für einen Step-Up-Current-Mode-Konverter.

Es ist Aufgabe der Erfindung, in effizienter Weise eine Regelung oder eine Fehlerkennung beim Betrieb von Leuchtmitteln durchzuführen.

Diese Aufgabe wird erfindungsgemäß durch die Merkmale der unabhängigen Ansprüche gelöst. Die abhängigen Ansprüche bilden den zentralen Gedanken der Erfindung besonders vorteilhaft weiter.

Ein erster Aspekt der Erfindung betrifft ein Verfahren zum Betrieb wenigstens eines Leuchtmittels. Dabei wird das Leuchtmittel ausgehend von einer Wechselrichterschaltung oder einer Halbbrücken- oder Vollbrückenschaltung betrieben. Ein Messsignal, das den Strom durch die Brückenschaltung und/oder ein Messsignal, das den Lampenstrom wiedergibt, wird/werden einem Eingang einer Steuerschaltung zugeführt und ein Messsignal, das die Spannung über dem wenigstens einen Leuchtmittel wiedergibt, wird demselben Eingang der

Steuerschaltung zugeführt, wobei die zugeführten Messsignale zur Lampenüberwachung dienen. Dabei wertet die Steuerschaltung die zugeführten Messsignale zur Fehlererkennung und/oder zum Betrieb der Leuchtmittel, insbesondere zum Einstellen eines die Leistung der Leuchtmittel wiedergebenden Parameters aus, wobei ein Fehlerzustand ein Halbbrückenstrom ist, der zum Zeitpunkt des Ausschaltens des potentialniedrigeren Schalters der Halbbrücke ansteigt oder in einem unzulässigen Bereich liegt, und wobei als Reaktion auf den erkannten Fehlerzustand die Ansteuerfrequenz der wechselweisen Taktung der Schalter der Halbbrücke erhöht wird, bis kein kapazitiver Betrieb mehr erkannt wird. Wenn die Steuerschaltung als integrierte Schaltung ausgeführt ist, lässt sich somit ein bzw. zwei Pin(s) des IC einsparen, da an einem Pin zwei oder drei zugeführte Messsignale ausgewertet werden.

Die Steuerschaltung wertet also die zugeführten Messsignale zur Fehlererkennung und/oder zum Betrieb der Leuchtmittel, insbesondere zum Einstellen eines die Leistung der Leuchtmittel wiedergebenden Parameters aus.

Die Steuerschaltung kann bei einer Fehlererkennung ein Fehlersignal ausgeben, die Betriebsweise der Leuchtmittel verändern oder die Leuchtmittel abschalten.

Ein Überspannungs-Fehlerzustand kann erfasst werden, wenn die Lampenspannung über einem vorgegebenen Schwellenwert liegt. In diesem Fall kann bspw. die Steuerschaltung den potentialniedrigeren Schalter einer Halbbrücke vorzeitig öffnen und/oder die Frequenz der wechselweisen Taktung der beiden Schalter der Halbbrücke erhöhen.

Ein Überstrom-Fehlerzustand kann anhand eines ein Halbbrückenstroms oder Lampenstroms erkannt werden, der über einem vorgegebenen Schwellenwert liegt.

Ein Fehlerzustand "Kapazitiver Betrieb" kann anhand eines Halbbrückenstrom erkannt werden, der zum Zeitpunkt des Ausschaltens des potentialniedrigeren Schalters der Halbbrücke ansteigt (Gradientenmessung), oder der in einem unzulässigen Bereich liegt, d.h. bspw. oberhalb einer vorgegebenen Schwelle (Absolutwertmessung). Bei diesem Fehlerzustand kann bspw. die Ansteuerfrequenz der wechselweisen Taktung der Schalter der Halbbrücke erhöht werden, bis kein kapazitiver Betrieb mehr erkannt wird.

Ein Fehlerzustand "EOL" (End-of-life, Gleichrichtereffekt der Lampe) kann daran erkannt werden, dass die Addition zweier Messwerte der Lampenspannung, die an zwei aufeinanderfolgenden Nulldurchgängen des Halbbrückenstroms genommen werden, einen Wert in einem unzulässigen Bereich ergibt.

Ein weiterer Aspekt der Erfindung bezieht sich auf eine Steuerschaltung, insbesondere einen ASIC, die für ein Verfahren nach einem der vorhergehenden Ansprüche ausgelegt ist.

Ein noch weiterer Aspekt der Erfindung bezieht sich auf eine Schaltung zum Betrieb eines Leuchtmittels. Die Schaltung weist auf:
- eine Wechselrichterschaltung oder eine Halbbrücken- oder Vollbrückenschaltung zur Bereitstellung einer Versorgungsspannung für das wenigstens eine Leuchtmittel (bspw. kann das Leuchtmittel Teil eines Lastkreises mit einem Resonanzkreis sein), und
- eine Steuerschaltung zur Regelung des Betriebs der Leuchtmittel und/oder Fehlererkennung,
wobei der Steuerschaltung an demselben Eingang ein Messsignal, das den Strom durch die Brückenschaltung und/oder ein Messsignal, das den Lampenstrom wiedergibt, und ein Messsignal, das die Spannung über dem wenigstens einen Leuchtmittel wiedergibt, zugeführt werden, wobei die zugeführten Messsignale zur Lampenüberwachung dienen. Hierbei ist die Steuerschaltung dazu ausgelegt, die zugeführten Messsignale zur Fehlererkennung und/oder zum Betrieb der Leuchtmittel, insbesondere zum Einstellen eines die Leistung der Leuchtmittel wiedergebenden Parameters auszuwerten, wobei ein Fehlerzustand ein Halbbrückenstrom ist, der zum Zeitpunkt des Ausschaltens des potentialniedrigeren Schalters der Halbbrücke ansteigt oder in einem unzulässigen Bereich liegt, und wobei die Steuerschaltung dazu ausgelegt ist, als Reaktion auf den erkannten Fehlerzustand die Ansteuerfrequenz der wechselweisen Taktung der Schalter der Halbbrücke zu erhöhen, bis kein kapazitiver Betrieb mehr erkannt wird.

Die Halbbrücken- oder Vollbrückenschaltung mit dem angeschlossenen Lastkreis kann auch einen Transformator zur Potentialtrennung aufweisen. Sofern ein Resonanzkreis vorhanden ist, kann dieser eine Serien- und / oder Parallelresonanz nutzen.

Die Steuerschaltung ist also dabei dazu ausgelegt, die zugeführten Messsignale zur Fehlererkennung und/oder zum Betrieb der Leuchtmittel, insbesondere zum Einstellen eines die Leistung der Leuchtmittel wiedergebenden Parameters auszuwerten.

Die Lampenspannung kann über einen Widerstandsteiler erfasst werden.

Der Halbbrückenstrom kann über einen Messwiderstand in Serie zu dem potentialniedrigeren Schalter der Halbbrücke erfasst werden.

Die Erfindung bezieht sich auch auf ein Beleuchtungssystem, aufweisend eine Steuereinheit und wenigstens ein damit vorzugsweise über eine Busleitung verbundenes Betriebsgerät der oben erläuterten Art.

Weitere Vorteile, Eigenschaften und Merkmale der Erfindung sollen nunmehr Bezug nehmend auf die Figuren der begleitenden Zeichnungen erläutert werden.

Dabei zeigen:
Figur 1a, 1b eine schematische Darstellung eines ersten Ausführungsbeispiels der Erfindung bzw. einer Abwandlung davon,
Figur 2 eine schematische Darstellung eines zweiten Ausführungsbeispiels der Erfindung,
Figur 3 eine schematische Darstellung eines dritten Ausführungsbeispiels der Erfindung,
Figur 4 ein Flussdiagramm zur Erläuterung eines erfindungsgemäßen Verfahrens zur Erkennung und Korrektur eines unzulässig hohen Halbbrückenstroms im Lampenzündvorgang.
Figur 5a ein Flussdiagramm zur Erläuterung eines ersten erfindungsgemäßen Verfahrens zur Erkennung und Korrektur eines kapazitiven Betriebs,
Figur 5b ein Flussdiagramm zur Erläuterung eines zweiten erfindungsgemäßen Verfahrens zur Erkennung und Korrektur eines kapazitiven Betriebs,
Figur 6 ein Flussdiagramm zur Erläuterung des erfindungsgemäßen Verfahrens zur EOL (End Of Lamp Life) - Erkennung,
Figur 7 ein Diagramm, in dem die Erkennung eines zu hohen Halbbrückenstroms beim Lampenzündungsvorgang gezeigt wird.
Figur 8 ein Diagramm, in dem die Erkennung eines induktiven Betriebs mittels Gradientenmessung gezeigt wird.
Figur 9 ein Diagramm, in dem die Erkennung eines kapazitiven Betriebs mittels Gradientenmessung gezeigt wird.
Figur 10 ein Diagramm, in dem die Erkennung eines kapazitiven Betriebs mittels Absolutwertmessung gezeigt wird.
Figur 11 ein Diagramm, in dem ein Messsignal einer Lampe ohne EOL (End Of Lamp life) gezeigt wird.
Figur 12 ein Diagramm, in dem ein Messsignal einer Lampe mit EOL (End Of Lamp life) mit positivem DC-Offset gezeigt wird.
Figur 13 ein Diagramm, in dem ein Messsignal einer Lampe mit EOL (End Of Lamp life) mit negativem DC-Offset gezeigt wird.
Figur 14 ein Diagramm, in dem ein berechneter DC - Offfset einer Lampe mit auftretendem EOL (End Of Lamp life) Effekt gezeigt wird.

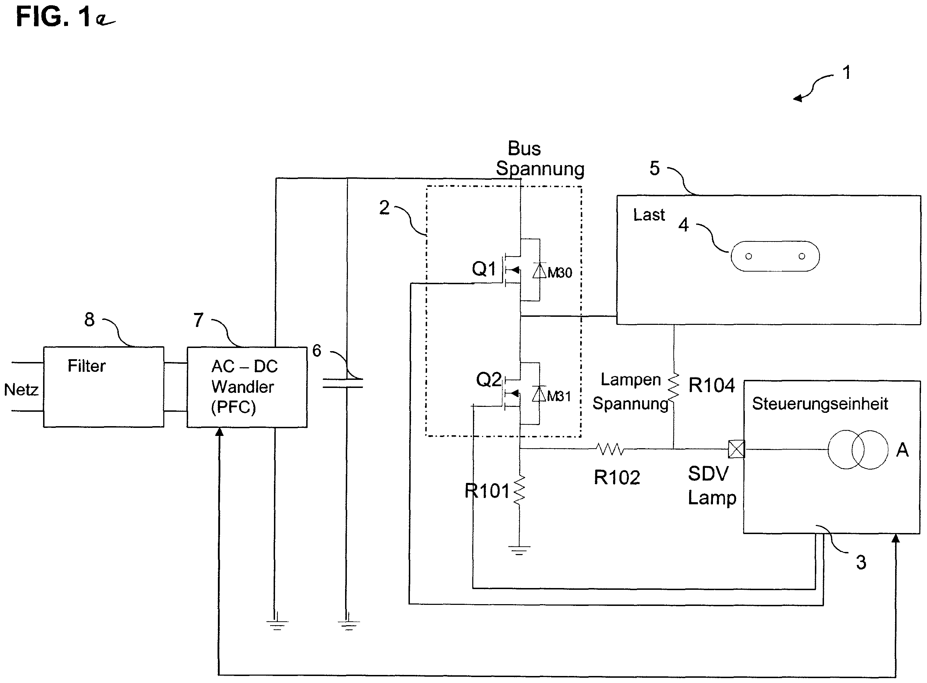

Zunächst soll schematisch ein erstes Ausführungsbeispiel einer Messschaltung für ein Betriebsgerät 1 für mindestens ein Leuchtmittel anhand von Fig. 1a erläutert werden.

Die Netzwechselspannung wird über einen Filter 8 einem AC/DC-Wandler 7 zugeführt. In dem AC/DC-Wandler 7 wird die Netzwechselspannung in eine Gleichspannung umgewandelt und auf eine höhere Spannung, vorzugsweise zwischen 300V und 400V, eingestellt. Diese liegt dementsprechend auch am Speicherkondensator 6 an. Der AC/DC-Wandler 7 kann einen Gleichrichter und auch eine aktive (durch einen durch eine Steuereinheit gesteuerten Schalter getaktete oder durch eine Ladepumpen-Schaltung (Active oder Passive Valley Fill) gebildete) Leistungsfaktorkorrektur- (PFC-) Schaltung enthalten.

Ein Wechselrichter 2, in diesem Fall eine Halbbrücke, steuert die Schalter Q1 und Q2, vorzugsweise Leistungstransistoren, abwechselnd an. Dieser wird zur Bereitstellung einer Versorgungsspannung für mindestens ein Leuchtelement 4 verwendet. Bei dem Leuchtelement oder Leuchtmittel kann es sich um eine Gasentladungslampe, aber auch um jeden anderen Leuchtmitteltypen handeln, beispielsweise um eine LED bzw. OLED oder LED/OLED-Anordnung.

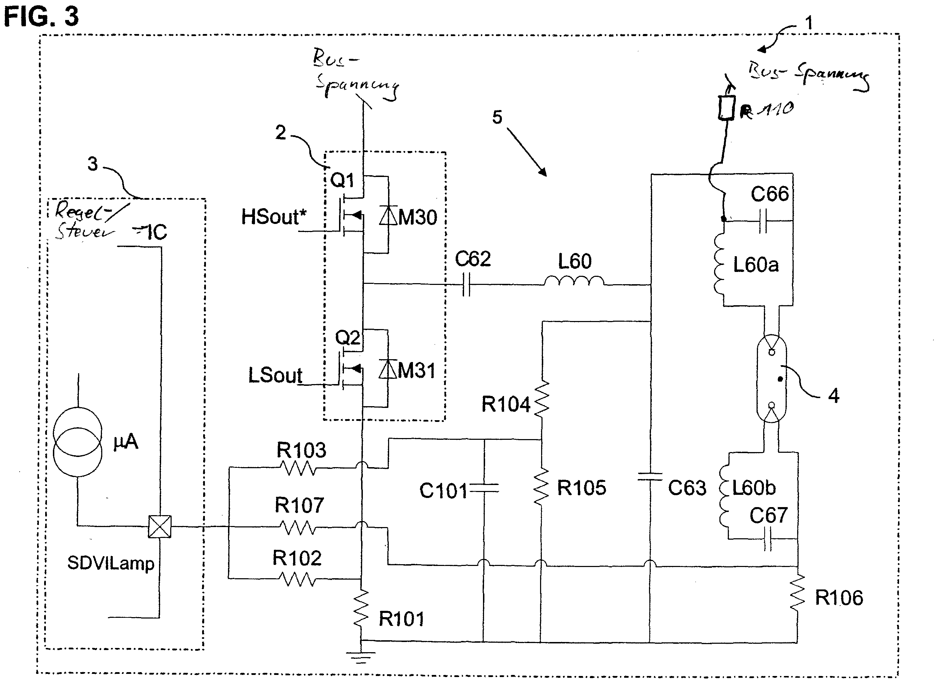

Zur Vereinfachung wird in Fig. 1a die Last 5, beinhaltend das Leuchtelement 4 sowie weitere für die Vorschaltung notwendige elektrische Bauelemente, nur angedeutet. Hierfür kann jedoch auf Fig.3 verwiesen werden.

Der Halbbrückenstrom wird über einen Messwiderstand R102 in Serie zu dem potentialniedrigeren Schalter Q2 der Halbbrücke erfasst. Die Lampenspannung wird über einen Widerstandsteiler R104 erfasst. Beide Messsignale werden vorzugsweise über einen einzelnen Pin SDV_lamp einer Steuerschaltung 3, vorzugsweise einem ASIC, zugeführt. Alternativ zum ASIC kann jedoch auch jede andere Form einer integrierten Schaltung wie ein Mikrocontroller oder eine Hybridlösung, oder eine konventionelle (diskrete) Schaltung verwendet werden.

Der ASIC 3 steuert ebenfalls den DC/DC Wandler und die Taktfrequenz der Halbbrücke 2.

Dem Pin SDV_lamp liegt also eine Addition der Spannungen des Lampenspannungs-Widerstandsteiler R104 und des Messwiderstands R102 an. Es ist jedoch auch möglich, die 2 Signale mit unterschiedlichen Anschlüssen des ASICs zu verbinden. Der ASIC 3 weist eine interne Konstantstromquelle A auf. Diese beaufschlagt das eingehende Signal mit einem DC-Level, so dass negative Spannungen am Pin SDVlamp vermieden werden.

Das Signal des Halbbrückenstroms weist ein regelmäßiges Zeitintervall auf, mit vorzugsweise einer halben Periodenlänge, in der es 0 ist. Grund hierfür ist, dass während dieser Zeitdauer der Schalter Q2 geöffnet ist und daher kein Halbbrückenstrom gemessen wird. In diesem Zeitraum liegt folglich am Pin SDVlamp nur die Lampenspannung an. Dieser Umstand kann zur Diskriminierung der beiden Signale ausgenutzt werden.

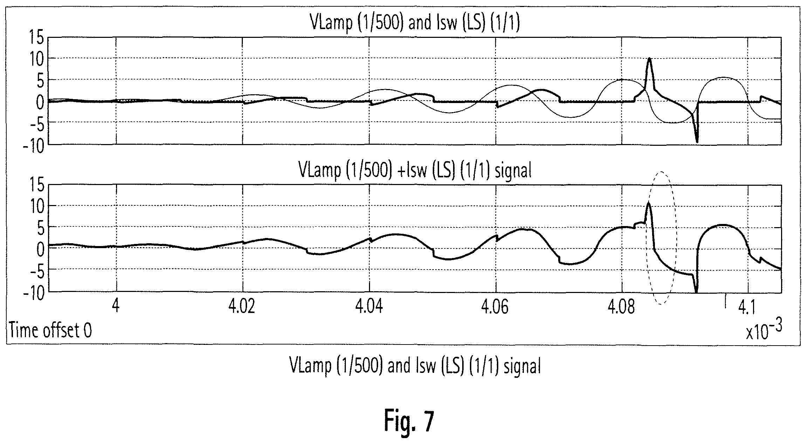

Das Signal der Lampenspannung weist eine Sinuskurve auf, die durch Messung von Frequenz und Amplitude hinreichend bestimmt werden kann. Beispiele beider Signale werden in Fig. 7 bis Fig. 13 gezeigt.

Weiterhin kann zu Diskriminierung ausgenutzt werden, dass Lampenspannungs-Fehlerzustände verhältnismäßig langsame Erscheinungen sind, während die Fehlerzustände beim Halbbrückenstrom mit verhältnismäßig großer Amplitude und dafür kurzzeitig auftreten.

Mit Hilfe der beiden Signale kann wie im Folgenden näher beschrieben ein Überstrom, bspw. bei Drosselsättigung im Lampenzündvorgang oder ein Überstrom im Lampenbetrieb bestimmt werden. Des Weiteren können ein kapazitiver Betrieb der Lampe und ein EOL-Effekt (End of Lamp life) der Lampe erkannt werden.

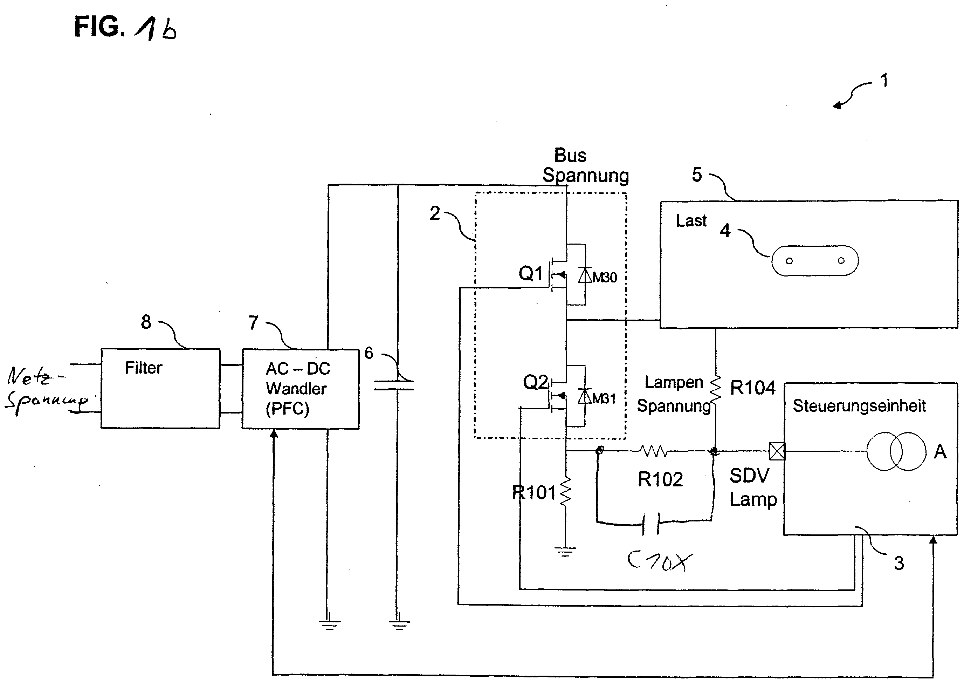

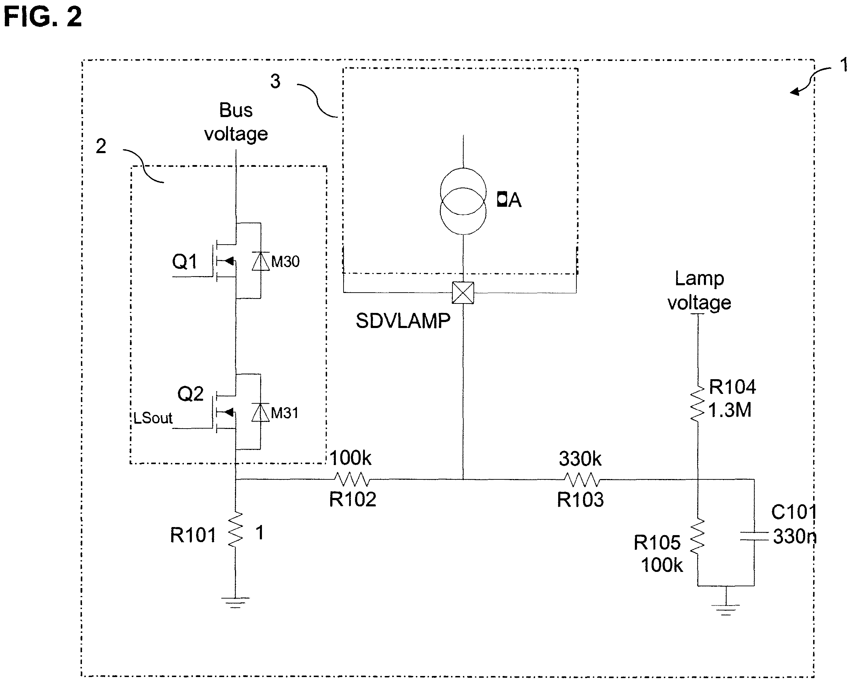

Die Messschaltung in Fig. 1b stellt eine Verbesserung zu dem Ausführungsbeispiel in Fig. 1a dar. (Die Änderung entspricht der Änderung der im Folgenden erläuterten Fig. 2, allerdings sind für die Variante von Fig. 1b weniger Bauteile erforderlich). Gleiche Bauteile wie in Fig. 1a sind mit den gleichen Bezugszeichen bezeichnet.

Die Dämpfung der Wechselspannungskomponente der Lampenspannung erfolgt bei der Schaltung gemäss Fig. 1b unabhängig von ihrer Gleichspannungskomponente. Vorzugsweise wird die Wechselspannungskomponente stärker gedämpft als die Gleichspannungskomponente. Dies wird durch die Parallelschaltung von Kondensator C10X und Widerstand R102 erreicht. Diese Parallelschaltung wirkt als Tiefpass stark dämpfend auf höhere Frequenzen. Der Kondensator C10X dient also Filter für den AC-Anteil. Somit ist der AC-Anteil relativ zum AC-Anteil weniger stark gedämpft.

Hieraus ergibt sich der Vorteil, dass beide Werte in für den ASIC geeignete Bereiche gedämpft werden können. Dies ist notwendig, da die Spannungsspitzen der Wechselspannungskomponente im Zündungsvorgang um ein Vielfaches höher sind, als die Gleichspannungskomponente, deren DC-Offset zur Identifizierung eines EOL verwendet wird. Wenn der Kondensator C10X einen ausreichend großen Wert aufweist, kann der hochfrequente Wechselspannungsanteil der Lampenspannung herausgefiltert werden, so dass das erfasste Signal am Eingang SDVLamp sich aus dem Gleichspannungsanteil der Lampenspannung und dem Halbbrückenstrom zusammensetzt. Somit kann während der Phase, in der kein Halbbrückenstrom erfasst wird, der Gleichspannungsanteil der Lampenspannung gemessen werden, während in der Phase, in der ein Halbbrückenstrom fließt, unter Beachtung des ermittelten Gleichspannungsanteils der Lampenspannung der Halbbrückenstrom erfasst werden.

Die Messschaltung in Fig.2 stellt eine Verbesserung zu dem Ausführungsbeispiel in Fig.1 dar. Die Dämpfung der Wechselspannungskomponente der Lampenspannung erfolgt hier unabhängig von ihrer Gleichspannungskomponente.

Vorzugsweise wird die Wechselspannungskomponente stärker gedämpft als die Gleichspannungskomponente. Dies wird durch die Parallelschaltung von Kondensator C101 und Widerstand R105 erreicht. Diese wirkt als Tiefpass stark dämpfend auf höhere Frequenzen. Der Kondensator C101 dient also Filter für den AC-Anteil. Somit ist der DC-Anteil relativ zum AC-Anteil weniger stark gedämpft.

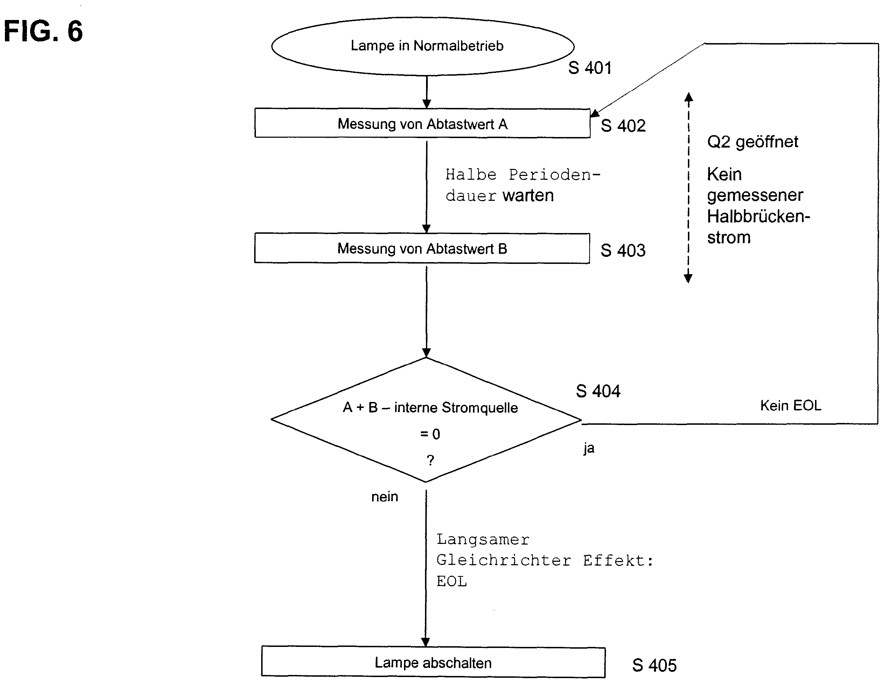

Hieraus ergibt sich der Vorteil, dass beide Werte in für den ASIC geeignete Bereiche gedämpft werden können. Dies ist notwendig, da die Spannungsspitzen der Wechselspannungskomponente im Zündungsvorgang um ein Vielfaches höher sind, als die Gleichspannungskomponente, deren DC-Offset zur Identifizierung eines EOL verwendet wird. Für weitere Details über EOL kann auf Fig.6 verwiesen werden.

Darüber hinaus muss nur noch das AC-Signal des Halbbrückenstroms verarbeitet werden. Dieses AC-Signal kann bspw. zur Identifikation einer Sättigung der Drossel sowie zur Erkennung von einem Überstrom, einem kapazitivem Betrieb oder auch zur Vorheizregelung verwendet.

Bei der Zünderkennung wird zusätzlich überwacht, ob die Drossel nicht mehr in Sättigung geht. Bei der Zündung einer zündunwilligen oder defekten Lampe wird die Schaltung in die Sättigung getrieben, da die Frequenz sehr nahe an Resonanz geschoben wird). Dieses Wegfallen der Sättigung, bzw. eines hohen Zündstromes, kann als Zünderkennungssignal genutzt werden

Weitere vorteilhafte Auswertungsmöglichkeiten des Stromsignals werden im Folgenden gezeigt. Hierfür kann der Halbbrückenstrom und/oder der Lampenstrom erfasst werden.

Damit der Lampenstrom für eine Messung beim Vorheizen verwendet werden kann, bedarf es einer besonderen Vorschaltung, so dass auch beim Vorheizen dieser Lampenstrom gemessen werden kann. Das Lampenstromsignal kann an dem Punkt "lamp voltage" (Fig.2) gemessen werden. Der Halbbrückenstrom kann über die Messspannung an dem Halbbrückenshunt R101 erfasst werden:
- Eine Halbbrückenstrommessung und/oder Lampenstrommessung kann zur "Closed Loop"-Regelung (d.h. Regelung mit geschlossener Regelschleife) der Lampenleistung oder der Vorheizenergie verwendet werden.
- Außerdem kann eine Messung zur Erkennung der Lampenwendeln anhand der übermittelten Vorheizenergie, bzw. des Glühdrahts durchgeführt werden. Somit kann eine Lampenerkennung durchgeführt werden.
- Es kann eine "Relamp"-Erkennung durchgeführt werden, d.h. ob eine (neue) Lampe eingesetzt worden ist, nämlich an dem Verhalten des Ausgangskreises
- Eine Halbbrückenstrommessung und/oder Lampenstrommessung kann zur Fehler Erkennung eingesetzt werden: Es kann die Gefahr einer Sättigung während der Zündung oder eines zu hohen Stroms auch während des Betriebs verringert werden.
- Außerdem kann ein Schutz vor einem kapazitiven Lampenbetrieb und/ oder einer Überlastung der Schalter beim Einschalten erreicht werden.
- Eine Halbbrückenstrommessung und/oder Lampenstrommessung kann zur Stromregelung verwendet werden.
- Der Halbbrückenstrom kann auch zur Regelung der Heizenergie, insbesondere der Vorheizenergie, verwendet werden.
- Der Lampenstrom kann zur Regelung der Lampenleistung oder zur Regelung der Vorheizenergie verwendet werden.
- Es kann auch eine Sättigung (insbesondere während der Zündung) oder eine Überspannung im Lastkreis anhand der Spannungsmessung erkannt werden.

Weitere vorteilhafte Anwendungen der Spannungsauswertung werden im Folgenden gezeigt.
- Eine Spannungsmessung kann zur End-Of-Life-Erkennung der Lampe eingesetzt werden.
- Eine Lampenspannungsmessung kann durchgeführt werden
- Es kann eine Erkennung des Heizdrahts durchgeführt werden, beispielsweise mittels des DC-Pfads der Bus-Spannung. Dadurch kann ebenfalls erkannt werden, ob überhaupt eine Lampe eingesetzt ist.
- Es kann eine "Relamp"-Erkennung durchgeführt werden, d.h. ob eine neue Lampe eingesetzt worden ist.
- Es kann eine Lampenzündung erkannt werden.

Dabei ist zu beachten, dass jegliche Auswertungsmöglichkeiten der Strommessung mit denen der Spannungsmessung kombiniert werden können.

Die Messschaltung in Fig.3 stellt eine weitere Verbesserung zu dem Ausführungsbeispiel in Fig.2 dar.

Wie oben für Fig.2 gezeigt, wird auch hier die Wechselspannungskomponente der Lampenspannung unterdrückt. Daher ist es möglich, das Signal am Pin SDVILamp mit einer weiteren AC-Komponente zu überlagern.

Hier wird zusätzlich zu dem Signal des Halbbrückenstrom und der Lampenspannung noch der Lampenstrom gemessen. Alle 3 Signale werden vorzugsweise demselben Pin SDVILamp des ASICs 3 zugeführt. Es ist jedoch auch möglich, die 3 Signale mit unterschiedlichen Anschlüssen oder nur teilweise (d.h. beispielsweise 2 Signale) zu verbinden.

Wie in Fig.2 bereits gezeigt, wird der Halbbrückenstrom über einen Messwiderstand R102 in Serie zu dem potentialniedrigeren Schalter Q2 der Halbbrücke erfasst. Die Lampenspannung wird über einen Widerstandsteiler R104 erfasst. Der Lampenstrom wird an einem Messwiderstand R107 gemessen.

Weiterhin zeigt Fig.3 die weiteren elektrischen Bauelemente des Betriebsgeräts 1 samt Leuchtmittel (im Folgenden Lampe genannt). Das Betriebsgerät 1 weist einen Wechselrichter 2, in diesem Fall eine Halbbrücke, auf. Dieser stellt eine Versorgungsspannung für mindestens ein Leuchtelement bereit. Diese wird einem Koppelkondensator C62 zugeführt. Der Koppelkondensator C62 ist mit einem Serienresonanzschwingkreis L60 - C63 verbunden. Dieser wird zur Zündung des Leuchtmittels 4 verwendet. Das Leuchtmittel 4 weist außerdem Heizwendeln L60a und L60b auf.

Die obere Heizwendel ist über den Widerstand R110 mit der Bus-Spannung verbunden, wodurch ein DC-Pfad über die Lampenwendel und den Widerstand R104 und R103 gebildet wird. Es kann somit eine Erkennung des Heizdrahts durchgeführt werden, also die Auswertung eine elektrischen Parameters des Heizdrahts, um daraus einzustellende Betriebsparameter ableiten zu können (bspw. mittels einer hinterlegten Abgleichstabelle). Wenn die Lampenwendel in diesem DC-Pfad gebrochen ist oder keine Lampe eingesetzt ist, wird dieser DC-Pfad unterbrochen (da der Kondensator C66 keinen DC-Strom durchlässt). Dadurch kann ebenfalls erkannt werden, ob überhaupt eine Lampe eingesetzt ist oder ob eine Lampe neu eingesetzt oder getauscht wurde. Anstelle der Bus-Spannung kann auch eine andere Speisespannung wie beispielsweise die gleichgerichtete Netzspannung genutzt werden. Die Messung zur Erkennung des Heizdrahts (also ob eine Lampe mit ungebrochener Lampenwendel eingesetzt ist, auch "Relamp"-Erkennung) kann vorzugsweise vor oder während der Vorheizung oder auch wiederholt nach einer Abschaltung aufgrund eines Lampenfehlers erfolgen.

Während der Zündung kann der unzulässige Zustand auftreten, dass die Drossel L60 gesättigt ist. Der Stromanstieg wird daher nicht mehr gedämpft. Er steigt vielmehr in einem Peak unzulässig an.

Zum Starten einer Lampe werden zunächst die Heizungswendeln der Lampe 4 vorgeheizt. Hierfür erzeugt die Halbbrücke 2 eine Wechselspannung, die oberhalb der Resonanzfrequenz der Resonanzschwingkreises L60 - C63 liegt. Die sich dadurch ergebende Spannung ist zu niedrig, um die Zündung der Lampe 4 hervorzurufen. Der PIN SDVILamp darf sich zu diesem Zeitpunkt im Standby-Zustand befinden, falls keine der oben beschriebenen Messungen in Anspruch genommen wird, wie bspw. die Lampenwendelerkennung oder die Vorheizregelung.

Am Ende der Vorheizzeit wird die Zündung der Lampe 4 dadurch erreicht, dass die Einschaltzeit der beiden Schalter Q1 und Q2 des Wechselrichters schrittweise erhöht wird. Dementsprechend reduziert sich die Betriebsfrequenz des Wechselrichters.

In der Vorheizphase fliesst ein geringer Strom durch die Lampe. Der DC-Offset, der durch den EOL Effekt verursacht wird, ist sehr gering. Dieser kann daher hier ignoriert werden. Daher ist hier keine Kompensation eines DC-Offsets durch eine interne DC-Stromquelle A notwendig. So ist es möglich, die interne Stromquelle A erst nach der Zündung der Lampe mit einem voreingestelltem Wert einzuschalten.

Die interne Stromquelle A kann auch als stufenweise schaltbare Stromquelle oder als Parallelschaltung von zwei Stromquellen realisiert werden. Dadurch können verschiedene Ströme zur Kompensation eines DC-Offsets durch die interne Stromquelle A eingeprägt werden und somit während der unterschiedlichen Betriebsphasen unterschiedliche Kompensationen bzw. Abschaltempfindlichkeiten erreicht werden. Vorzugsweise kann während der Zündung ein geringerer Strom für die interne Stromquelle A eingestellt werden, so dass eine geringere Empfindlichkeit entsprechend der zu erwartenden hohen Spannungen eingestellt werden kann.

Die Erkennung von Fehlern wie beispielsweise die Erkennung des EOL-Effekts kann abhängig vom Betriebszustand der Lampe bzw. der Schaltung aktiviert werden.

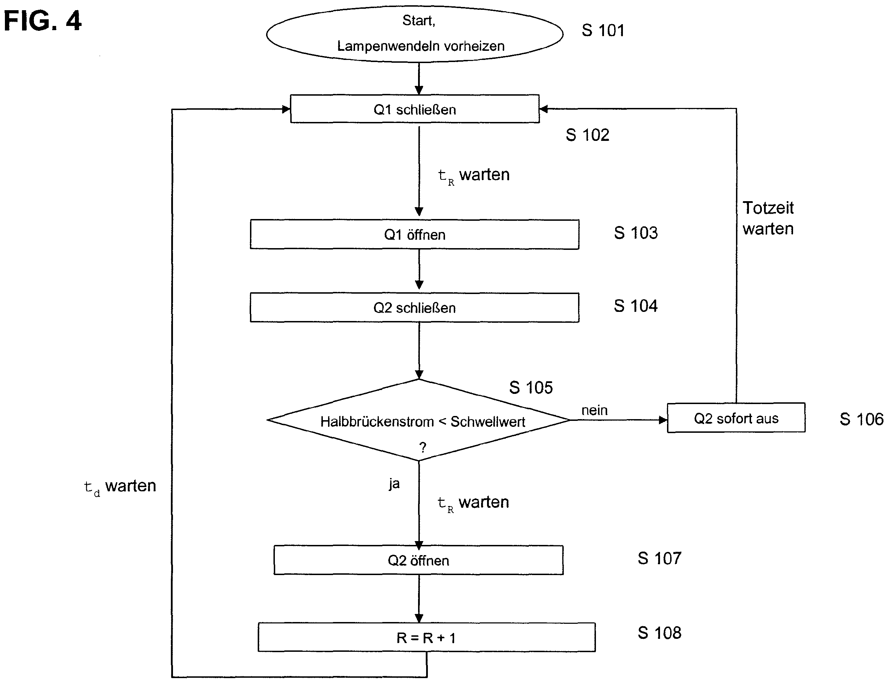

Das Flussdiagramm in Fig.4 beschreibt ein Verfahren zur Vermeidung von Überstrom bei der Lampenzündung.

Nach dem Start des Vorgangs in Schritt S101 werden die Heizungswendeln vorgeheizt. In S102 wird Schalter Q1 des Wechselrichters geschlossen. Schalter Q2 ist zu dieser Zeit geöffnet. Nach einer Zeit t_{R} wird der Schalter Q1 in S103 wieder geöffnet. Bei t_{R} handelt es sich vorzugsweise um die halbe Periodendauer der aktuellen Betriebsfrequenz des Wechselrichters, es kann sich jedoch auch um eine kürzere Zeitdauer handeln.

In S104 wird der Schalter Q2 geschlossen. Zwischen S103 und S104 kann eine Verzögerungszeit t_{D} liegen.

In S105 wird das an Pin SDVlamp anliegende Signal gemessen. Befindet es sich über einem Schwellenwert Vlamp peak (pk) so wird der Lampe ein unzulässig hoher Strom zugeführt. Es ist jedoch auch denkbar, einen unzulässig hohen Strom erst dann zu konstatieren, wenn der Schwellenwert mehrmals, beispielsweise fünf mal übertreten wurde.

Zusätzlich kann auch der Anstieg des Stromes bewertet werden und ein unzulässig hoher Anstieg als zusätzliches Bewertungskriterium genutzt werden.

Bei Bestimmung des Schwellenwerts muss an der im ASIC zu analysierende Kennlinie ständig das alternierende Signal der Lampenwechselspannung berücksichtigt werden. Hierfür muss das Signal der Lampenspannung vom ASIC analog ohne Verzögerung kompensiert werden. Mit Hilfe des Zeitfensters, in dem Schalter Q2 geöffnet und dementsprechend der gemessene Halbbrückenstrom null ist, können Maximum und Minimum des Lampenspannungssinussignal ermittelt werden.

Bei einer Glättung bzw. Dämpfung der Wechselspannungskomponente der Lampenspannung durch einen Kondensator (s. Fig. 2 und Fig. 1b) kann es aber ausreichend sein, dass nur die Gleichspannungskomponente der Lampenspannung betrachtet werden muß.

Eine Illustration des zu analysierenden Signals liefert Fig.7.

Zur Rückführung des Halbbrückenstroms in zulässige Bereiche wird in S106 der Schalter Q2 sofort wieder geöffnet. Dies kommt einer Erhöhung der aktuellen Schaltfrequenz gleich. Die eigentliche Betriebsfrequenz des Wechselrichters wird jedoch nicht verändert. Der Vorgang wird stattdessen mit Beibehalten der aktuellen Betriebsfrequenz, vorzugsweise nach einer Totzeit, durch einen Rücksprung zu S102 wiederholt. Es ist jedoch auch möglich, die Rückführung des Halbbrückenstroms in zulässige Bereiche zu erreichen, indem die Betriebsfrequenz des Wechselrichters kurzfristig erhöht wird.

Befindet sich das an Pin SDVlamp anliegende Signal unterhalb eines Schwellenwerts V_{lamp_peak} (pk), wird in S107 nach der Zeit t_{R} der Schalter Q2 wieder geöffnet. Der Schalter Q2 kann in S107 jedoch auch in einer Zeit t< t_{R} wieder geöffnet werden.

In S108 wird die Einschaltdauer t_{R} vergrößert. Somit wird auch die Betriebsfrequenz des Wechselrichters verkleinert. Der Vorgang wiederholt sich durch einen Rücksprung von S108 zu S102. Zwischen S108 und S102 kann eine Verzögerungszeit t_{D} liegen.

Im Normalbetrieb der Lampe kann der unzulässige Zustand auftreten, dass die Lampe in kapazitiv betrieben wird. Bei diesem fließt beim Einschalten bereits ein Strom durch den Schalter. Hierdurch wird kann der Schalter zerstört werden. Des Weiteren funktioniert im kapazitiven Betrieb die Regelung der Lampe durch den ASIC nicht mehr.

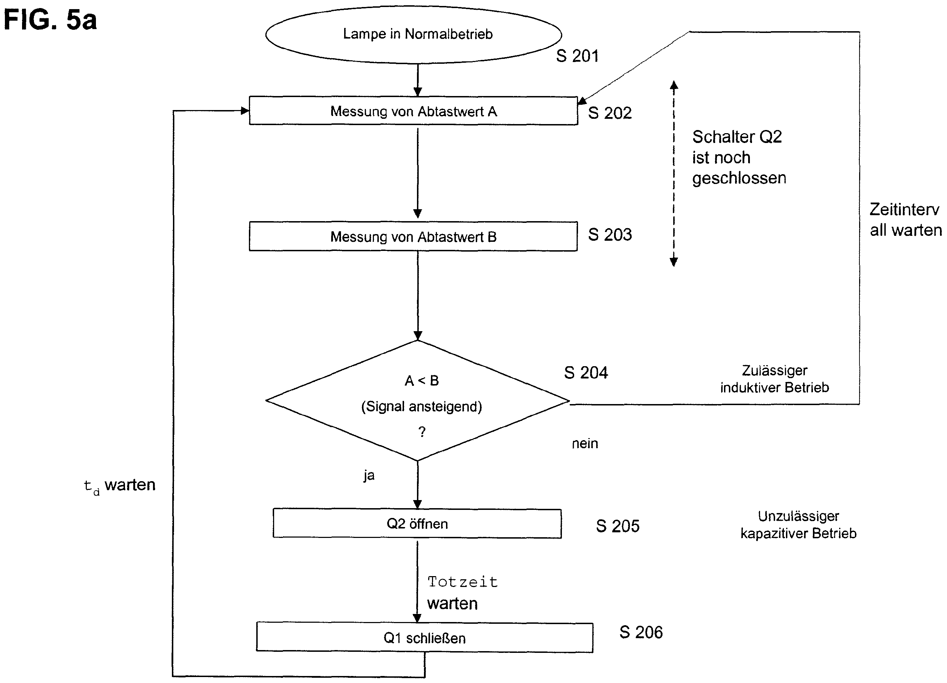

In Fig.5a wird ein Flussdiagramm über ein Verfahren zur Vermeidung eines kapazitiven Betriebs der Lampe gezeigt. Zur Identifizierung eines kapazitiven Betriebs wird hier eine Gradientenmessung zwischen der Phase von Lampenspannung und Halbbrückenstrom vorgenommen. (Anstelle der Lampenspannung kann auch eine andere Spannung im Lastkreis überwacht werden, beispielsweise die Spannung über der Drossel oder über einem Transformator, sofern dieser vorhanden ist.)

Nach einer erfolgreichen Zündung befindet sich die Lampe in Schritt S201 im Normalbetrieb. Es werden in S202 mindestens zwei Messungen zu aufeinanderfolgenden Zeitpunkten am Pin SDVlamp vorgenommen. Bei den Messungen handelt es sich um Abtastwerte (Samples). Die Messungen werden zu einem Zeitpunkt gewählt, wenn der Schalter Q2 gerade noch nicht geöffnet worden ist.

In S203 wird die Differenz der mindestens 2 Messungen berechnet.

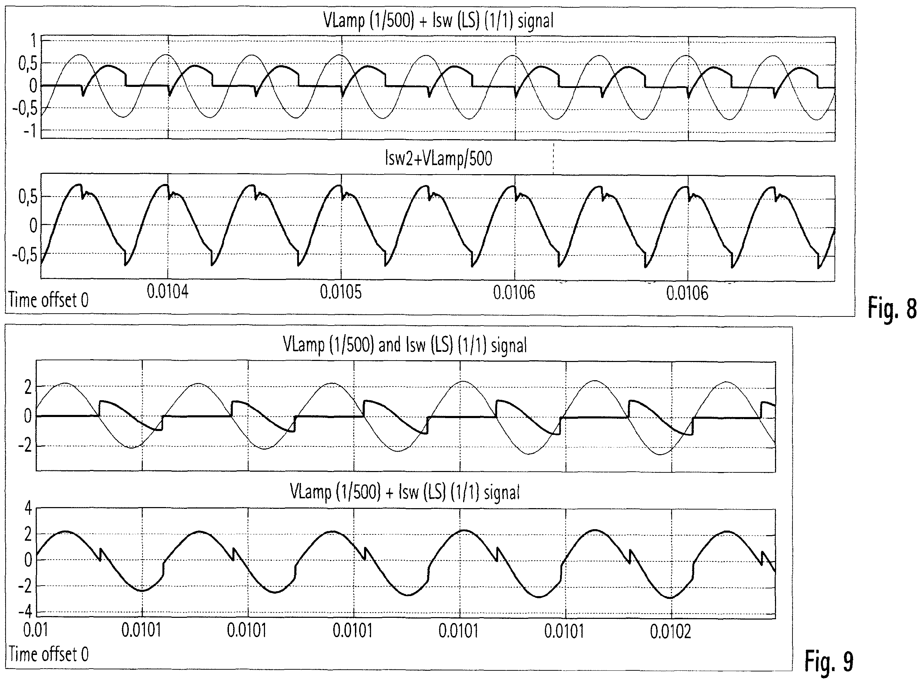

Ist der nachfolgende Abtastwert niedriger als der vorige, so besteht ein induktiver Betrieb der Lampe. Dieser Betrieb ist zulässig. Ein Beispielsignal eines induktiven Betriebs liefert Fig.8.

Es wird zu S202 zurückgesprungen und der Messvorgang wiederholt. Es besteht jedoch auch die Möglichkeit erst nach einem Zeitintervall, oder erst nach der Veränderung von Parametern, z.B. der Lampendimmung, erneut eine Messung vorzunehmen.

Ist der nachfolgende Abtastwert höher als der vorige, so besteht ein kapazitiver Betrieb der Lampe. Dieser Betrieb ist unzulässig. Ein Beispielsignal eines kapazitiven Betriebs liefert Fig.9. Es ist jedoch auch denkbar, einen unzulässig kapazitiven Betrieb erst dann zu konstatieren, wenn der nachfolgende Abtastwert mehrmals, beispielsweise fünf mal nacheinander höher als der vorige war.

Daraufhin wird in S204 der Schalter Q2 geöffnet.

Nach einer Totzeit wird in S205 der Schalter Q1 wieder geschlossen. Bei der Totzeit handelt es sich vorzugsweise um einen vorgegebenen Wert, es ist jedoch auch denkbar ein adaptives Verfahren zur Bestimmung der Totzeit zu verwenden. So wäre beispielsweise eine Verlängerung der Totzeit bei einmaligem oder erneutem Auftreten eines kapazitiven Betriebs möglich. Die Totzeit kann auch dadurch angepasst werden, dass der Halbbrückenstrom kurz vor Einschalten des Schalters Q2 (also während schon ein Strom durch die Freilaufdiode vom Schalter Q2 fließt) gemessen und geprüft wird. Bei einem unzulässigen Wert für den Halbbrückenstrom kann die Totzeit erhöht werden und somit der Schalter Q2 vor einem Überstrom bzw. einer Überlastung geschützt werden.

Nach Schließen des Schalters Q1 in S205 wird zu S202 zurück gesprungen und der Messvorgang wiederholt.

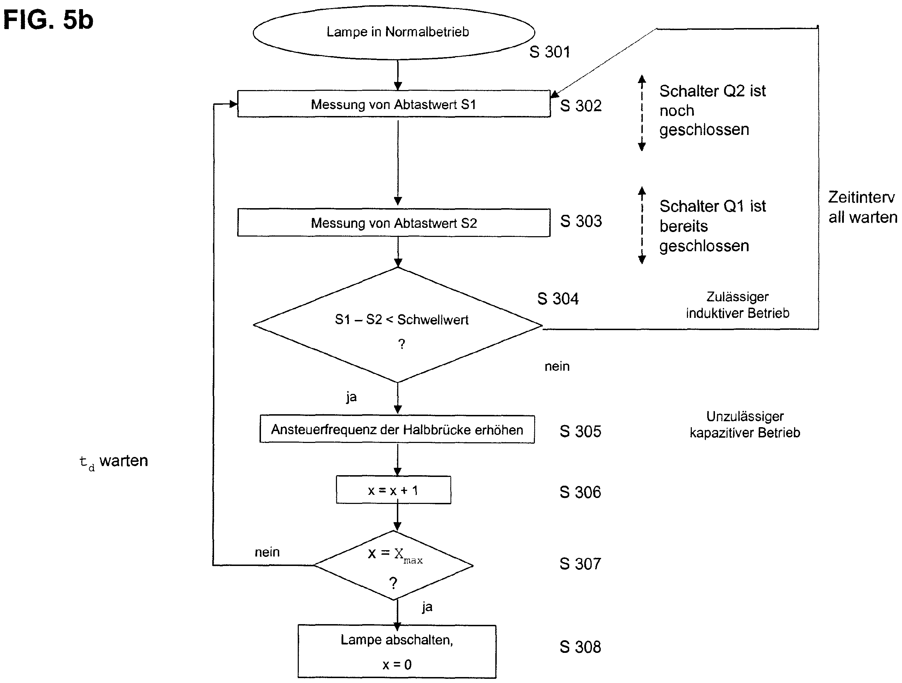

Ein weiteres Verfahren zur Vermeidung eines kapazitiven Betriebs der Lampe wird in dem Flussdiagramm von Fig.5b gezeigt. Zur Identifizierung eines kapazitiven Betriebs wird hier eine Differenzmessung von Absolutwerten vorgenommen.

An Stelle der Differenzmessung ist jedoch auch eine Absolutwerterfassung denkbar. Hierbei wird ein Vergleich des Stromwerts vor dem Ausschalten von Schalter Q2 mit einem Schwellenwert vorgenommen.

Nach einer erfolgreichen Zündung befindet sich die Lampe in Schritt S301 im Normalbetrieb. Es wird in S302 eine Messung S1 unmittelbar vor dem Ausschalten von Schalter Q2 am Pin SDVlamp vorgenommen.

Ein weitere Messung S2 wird in S303 unmittelbar nach dem Einschalten von Schalter Q1 vorgenommen.

In S304 wird der Schwellenwert mit der Differenz S1 - S2 verglichen.

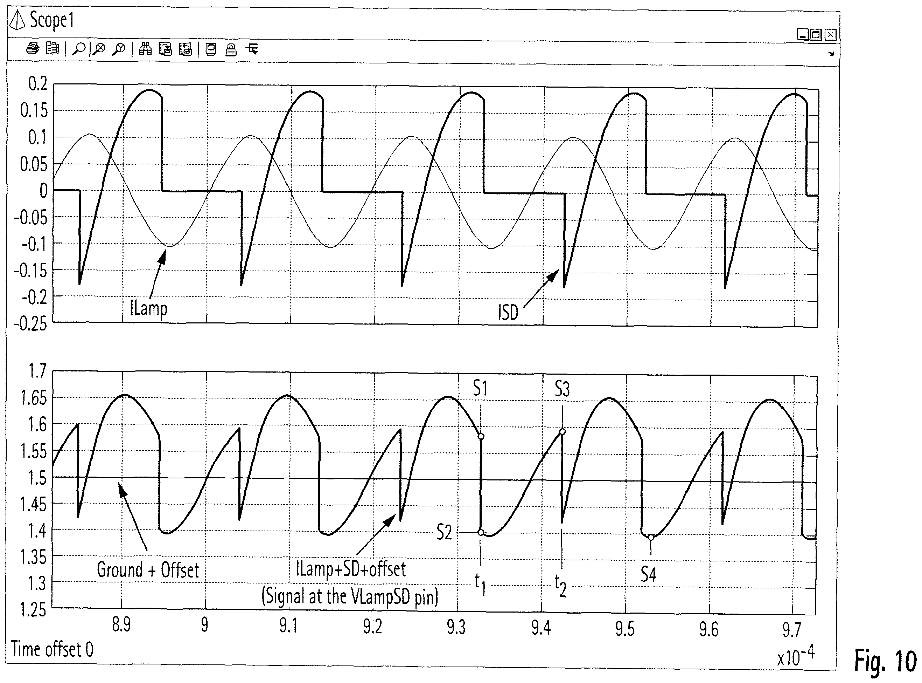

Ein Beispiel hierfür liefert Fig.10. Der Strom ISD ist dabei der durch den Messwiderstand (Shunt) R101, d.h. das dazu proportionale Spannungssignal. Der Beitrag "Offset" wird gezielt durch eine interne Stromquelle im ASIC erzeugt (dargestellt in Fig.1 und Fig.2). Das Signal I_{Lamp} ist das Signal, das an dem Punkt "lamp voltage" in Figur 2 anliegt. Signale ISD und SD sind die gleichen, nämlich jeweils die Messspannung an dem Halbbrücken-Shunt (Messwiderstand zwischen dem potentialniedrigeren Schalter und Masse) R101.

Ist die Differenz S1 - S2 größer als der Schwellenwert, so besteht ein induktiver Betrieb der Lampe. Dieser Betrieb ist zulässig. Es wird zu S302 zurückgesprungen und der Messvorgang wiederholt. Es besteht jedoch auch die Möglichkeit erst nach einem Zeitintervall, oder erst nach der Veränderung von Parametern, z.B. der Lampendimmung, erneut eine Messung vorzunehmen.

Ist die Differenz S1 - S2 kleiner als der Schwellenwert, so besteht ein kapazitiver Betrieb der Lampe. Dieser Betrieb ist unzulässig. Es ist jedoch auch denkbar, einen unzulässig kapazitiven Betrieb erst dann zu konstatieren, wenn die Differenz mehrmals, beispielsweise fünf mal nacheinander kleiner als der Schwellenwert war.

Die Ansteuerfrequenz der Halbbrücke wird in S305 erhöht. Dadurch gelangt der Lampen Betrieb wieder in den induktiven Ast der Resonanzkurve.

Falls über eine vorgegeben Anzahl von Messungen hinaus ein unzulässiger kapazitiver Betrieb erfasst wird, wird die Lampe abgeschaltet.

Hierfür wird in S306 ein Zähler x um eins erhöht.

Der Wert des Zählers x wird in S307 mit einem Referenzwert Xₘₐₓ verglichen.

Ist der x < Xₘₐₓ, wird der Vorgang durch einen Rücksprung von S307 zu S302 wiederholt.

Ist x ≥ Xₘₐₓ, so wird die Lampe in S308 abgeschaltet. Hierbei kann der der Zähler x auf 0 zurück gesetzt werden. Anstatt eines sofortigen Abschaltens, ist auch jede andere Maßnahme denkbar, beispielsweise ein Signal, das vor einem kapazitiven Betrieb warnt.

Es bleibt zu vermerken, dass selbstverständlich auch die Lösungsansätze aus Fig. 4a und Fig.4b vertauscht werden können. Das bedeutet, dass bei einer Gradientenmessung ebenfalls eine Frequenzerhöhung der Halbbrücke, sowie bei einer Absolutwertmessung ein frühes Öffnen von Schalter 2 möglich ist. Auch andere Kombinationen von Merkmalen aus Fig.4a und Fig.4b sind denkbar.

Nach einer erfolgreichen Zündung der Lampe wird die Ladung in Kondensator C101 langsam kleiner. Diese Ladung wurde während der Zündphase durch einen hohen Halbbrückenstrom verursacht. Die interne Gleichstromquelle und die Gleichspannungskomponente der Lampenspannung laden jedoch auf Grund eines EOL (End of Lamp Life) - Effekts den Kondensator C101 zur selben Zeit wieder auf. Auf diese Weise stabilisiert sich die Ladung auf einem gewissen Niveau.

Mit Hilfe einer Messung vor oder während des Ausschaltens des Schalters Q1 kann die Gleichspannungskomponente der Lampenspannung einfach überwacht werden.

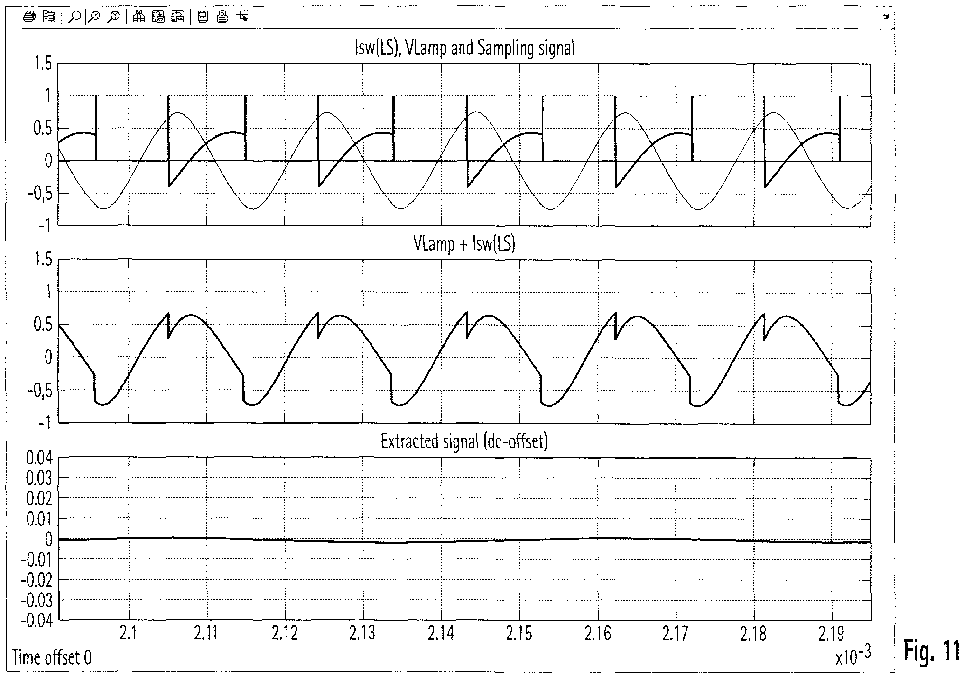

Ein anschauliches Beispiel einer Messung des EOL-Effekts liefert Fig.11, Fig.12, Fig.13 und Fig.14. Hier werden eine Messung vor dem Schließen von Schalter 2 und eine Messung nach dem Öffnen von Schalter 2 vorgenommen.

In Fig. 11 herrscht kein EOL-Effekt vor. Der berechnete DC-Offset ist null.

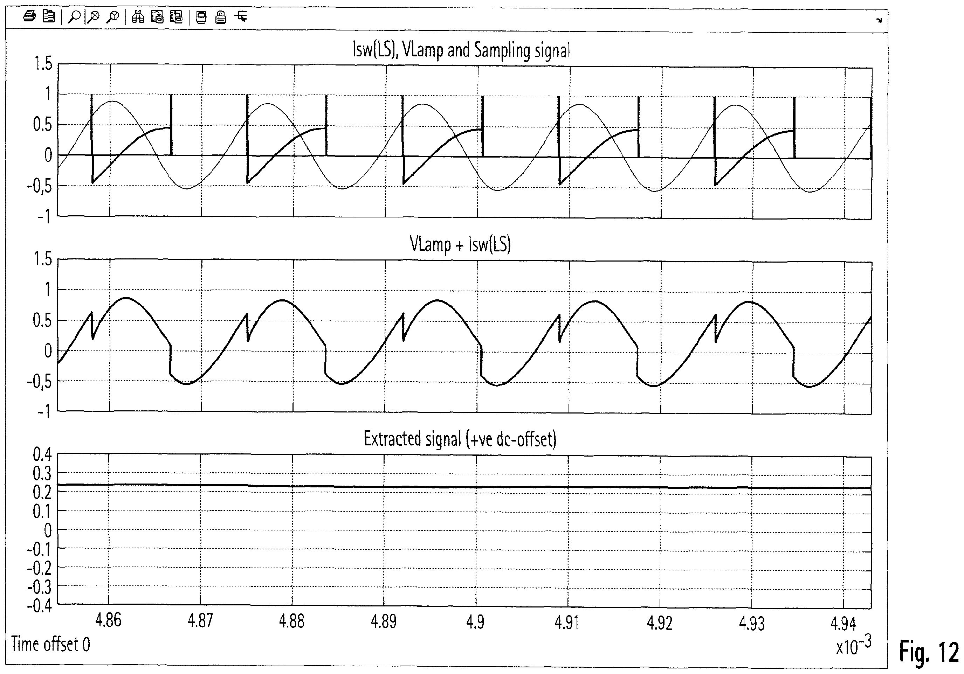

In Fig. 12 herrscht ein EOL-Effekt vor. Der berechnete DC-Offset ist positiv.

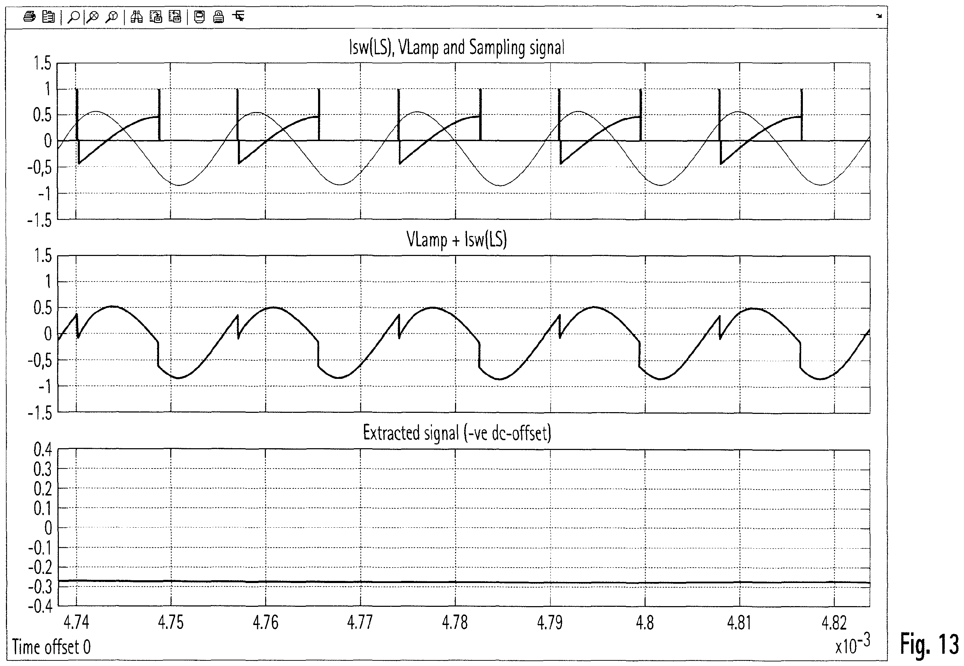

In Fig. 13 herrscht ein EOL-Effekt vor. Der berechnete DC-Offset ist negativ.

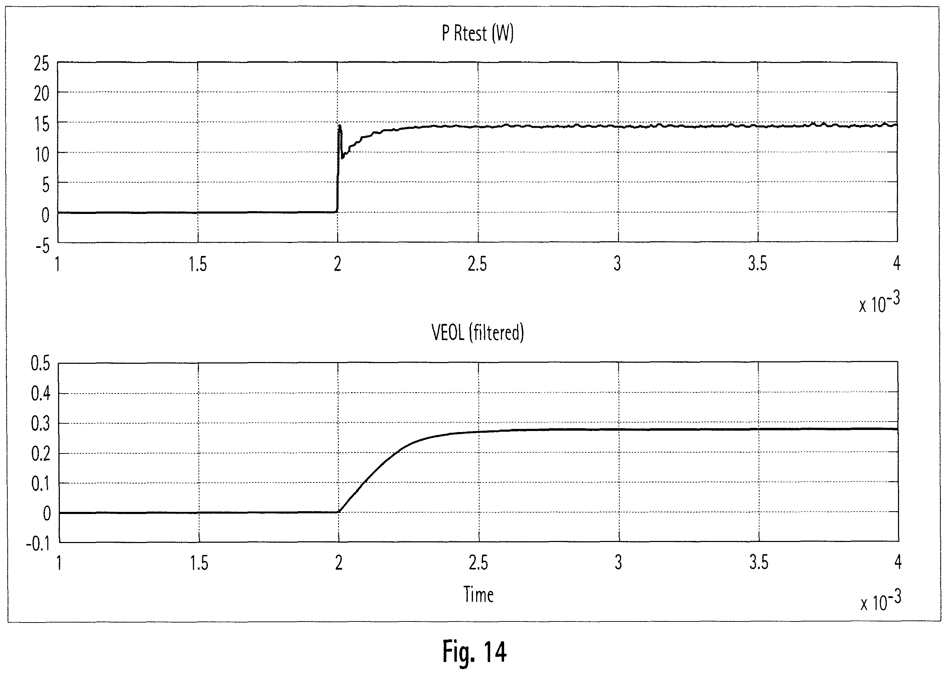

In Fig. 14 wird ein Beispieldiagramm eines berechneten DC-Offset gezeigt, in dem zum Zeitpunk t = 2 ein positiver EOL-Effekt auftritt.

In Fig.6 wird Flussdiagramm über ein Verfahren zur Erkennung eines EOL (End Of Lamp Life) gezeigt. Dieser kann an einem auftretenden langsamen Gleichrichtereffekt der Lampe erkannt werden. Die Erkennung wird vorzugsweise erst nach einer gewissen Zeit nach der Lampenzündung, beispielsweise nach 200µm aktiviert. Damit wird sicher gestellt, dass der Kondensator C101 von der internen Stromquelle vollkommen aufgeladen worden ist.

Nach einer erfolgreichen Zündung befindet sich die Lampe in Schritt S401 im Normalbetrieb.

In S402 wird ein erster Abtastwert A1 am Pin SDVlamp genommen.

In S403 wird ein zweiter Abtastwert A2 am Pin SDVlamp genommen.

Beide Messungen werden zu einem Zeitpunkt gewählt, wenn der Schalter Q2 geöffnet ist. Es fließt also zu beiden Zeitpunkten kein Halbbrückenstrom. Dadurch kommt der einzige gemessene DC - Anteil von der Lampenspannung. Es wird dabei davon ausgegangen, dass der Lampenstrom keine Gleichstromanteile besitzt.

Es ist ebenfalls notwendig, dass die beiden Messungen im Abstand von einer halben Periodendauer der Betriebsfrequenz der Halbbrücke vorgenommen werden. Dies bedeutet, dass die beiden Abtastzeitpunkte eine Phasenverschiebung von 180° aufweisen. Es ist folglich notwendig, dass Schalter Q2 mindestens eine halbe Periodendauer geöffnet ist.

Wenn das Signal kein DC - Anteil aufweist, müssen auf Grund des sinusförmigen Signals die beiden Messwerte gleichen Betrag, aber unterschiedliches Vorzeichen haben.

In S404 wird daher eine Addition der beiden Abtastwerte A1 und A2 vorgenommen. Auf Grund der Pegelverschienung durch die interne Stromquelle des ASIC wird das Ergebnis der Addition auf jeden Fall im positiven bereich sein. Um einen DC - Effekt der Lampe zu erkennen, muss folglich der DC - Pegel der internen Stromquelle des ASIC noch von der Addition von A1 und A2 subtrahiert werden.

Wenn kein DC - Effekt der Lampe festgestellt werden kann, besteht auch kein EOL (End of Lamplife). Der Vorgang wird durch einen Rücksprung von S404 zu S402 wiederholt.

Wird ein DC - Effekt der Lampe festgestellt, besteht ein EOL (End of Lamplife). In diesem Fall wird in S405 die Lampe abgeschaltet. Es ist jedoch auch denkbar, einen EOL erst dann zu konstatieren, wenn ein DC-Effekt (Gleichrichtereffekt) mehrmals, beispielsweise 5 mal nacheinander festgestellt worden ist.

Anstatt eines sofortigen Abschaltens, ist auch jede andere Maßnahme denkbar, beispielsweise ein Signal, das vor einem EOL (End of Lamplife) warnt.

### Bezugszeichenliste:

- 1: Betriebsgerät
- 2: Wechselrichter
- 3: Steuerschaltung mit interner Gleichstromquelle
- 4: Leuchtelement
- 5: Last
- 6: Speicherkondensator
- 7: AC/DC-Wandler
- 8: Filter
- Q1: potentialhöherer Schalter (HS= High Side)
- Q2: potentialniedrigerer Schalter (LS= Low Side)
- R102: Messwiderstand in Serie zur Halbbrücke zur Messung des Halbbrückenstroms
- R104: Spannungsteilerwiderstand parallel zum Leuchtelement zur Messung der Lampenspannung
- SDVLamp: Pin von ASIC, dem die Messung des Halbbrückenstroms und der Lampenspannung zugeführt werden
- SDVILamp: Pin des ASICs, dem die Messung des Halbbrückenstroms, der Lampenspannung und des Lampenstroms zugeführt werden
- A: interne Gleichstromquelle des ASICs
- R101: Messwiderstand ("Shunt")
- C101: Wechselstromfilter
- R107: Messwiderstand in Serie zum Leuchtelement zur Messung des Lampenstroms
- C62: Koppelkondensator
- L60: Drossel des Serienresonanzschwingkreises
- C63: Kondensator des Serienresonanzschwingkreises
- I_{SW}: Halbbrückenstrom
- ILamp: Lampenstrom
- VLamp: Lampenspannung

## Patentansprüche

1. Verfahren zum Betrieb wenigstens eines Leuchtmittels (4), wie bspw. LED, OLED oder Gasentladungslampe, wobei
- das Leuchtmittel (4) ausgehend von einer Wechselrichterschaltung (2) oder einer Halbbrücken- oder Vollbrückenschaltung (2) betrieben wird,
- ein Messsignal, das den Strom durch die Brückenschaltung und/oder ein Messsignal, das den Lampenstrom wiedergibt, einem Eingang (SDVLamp / SDVILamp) einer Steuerschaltung (3) zugeführt wird/werden, und
- ein Messsignal, das die Spannung über dem wenigstens einen Leuchtmittel (4) wiedergibt, demselben Eingang der Steuerschaltung (3) zugeführt wird,
- wobei die zugeführten Messsignale zur Lampenüberwachung dienen,
- wobei die Steuerschaltung (3) die zugeführten Messsignale zur Fehlererkennung und/oder zum Betrieb der Leuchtmittel (4), insbesondere zum Einstellen eines die Leistung der Leuchtmittel (4) wiedergebenden Parameters auswertet,
- wobei ein Fehlerzustand ein Halbbrückenstrom ist, der zum Zeitpunkt des Ausschaltens des potentialniedrigeren Schalters (Q2) der Halbbrücke (2) ansteigt oder in einem unzulässigen Bereich liegt, und
- wobei als Reaktion auf den erkannten Fehlerzustand die Ansteuerfrequenz der wechselweisen Taktung der Schalter (Q1, Q2) der Halbbrücke (2) erhöht wird, bis kein kapazitiver Betrieb mehr erkannt wird.

2. Verfahren nach Anspruch 1,
bei dem die Steuerschaltung (3) bei einer Fehlererkennung ein Fehlersignal ausgibt, die Betriebsweise der Leuchtmittel (4) verändert oder die Leuchtmittel (4) abschaltet.

3. Verfahren nach Anspruch 1 oder 2,
bei dem ein Fehlerzustand eine Lampenspannung ist, die über einem vorgegebenen Schwellenwert liegt.

4. Verfahren nach Anspruch 3,
bei dem bei einer unzulässig hohen Lampenspannung die Steuerschaltung (3) den potentialniedrigeren Schalter (Q2) einer Halbbrücke (2) vorzeitig öffnet und/oder die Frequenz der wechselweisen Taktung der beiden Schalter (Q1, Q2) der Halbbrücke (2) erhöht.

5. Verfahren nach einem der Ansprüche 1 bis 4,
bei dem ein Fehlerzustand ein Halbbrückenstrom oder ein Leuchtmittelstrom ist, der über einem vorgegebenen Schwellenwert liegt.

6. Verfahren nach einem der Ansprüche 1 bis 5,
bei dem ein Fehlerzustand ist, wenn die Addition zweier Messwerte der Lampenspannung, die an zwei aufeinanderfolgenden Nulldurchgängen des Halbbrückenstroms genommen werden, einen Wert in einem unzulässigen Bereich ergibt.

7. Steuerschaltung (3), insbesondere ASIC, zum Betrieb wenigstens eines Leuchtmittels (4), wie bspw. LED, OLED oder Gasentladungslampe, wobei das Leuchtmittel (4) ausgehend von einer Wechselrichterschaltung (2) oder einer Halbbrücken- oder Vollbrückenschaltung (2) betrieben wird,
- wobei die Steuerschaltung einen Eingang aufweist und dazu eingerichtet ist, über diesen Eingang
- ein Messsignal, das den Strom durch die Brückenschaltung und/oder ein Messsignal, das den Lampenstrom wiedergibt, und
- ein Messsignal, das die Spannung über dem wenigstens einen Leuchtmittel (4) wiedergibt,
zugeführt zu bekommen,
- wobei die zugeführten Messsignale zur Lampenüberwachung dienen,
- wobei die Steuerschaltung (3) dazu ausgelegt ist, die zugeführten Messsignale zur Fehlererkennung und/oder zum Betrieb der Leuchtmittel, insbesondere zum Einstellen eines die Leistung der Leuchtmittel (4) wiedergebenden Parameters auszuwerten,
- wobei ein Fehlerzustand ein Halbbrückenstrom ist, der zum Zeitpunkt des Ausschaltens des potentialniedrigeren Schalters (Q2) der Halbbrücke (2) ansteigt oder in einem unzulässigen Bereich liegt, und
- wobei die Steuerschaltung (3) dazu ausgelegt ist, als Reaktion auf den erkannten Fehlerzustand die Ansteuerfrequenz der wechselweisen Taktung der Schalter (Q1, Q2) der Halbbrücke (2) zu erhöhen, bis kein kapazitiver Betrieb mehr erkannt wird.

8. Betriebsgerät für Leuchtmittel, insbesondere für Gasentladungslampen, LEDs oder OLEDs,
aufweisend eine Steuerschaltung nach Anspruch 7.

9. Beleuchtungssystem,
aufweisend eine Steuereinheit und wenigstens ein damit vorzugsweise über eine Busleitung verbundenes Betriebsgerät nach Anspruch 8.

10. Schaltung (1) zum Betrieb eines Leuchtmittels, aufweisend
- eine Wechselrichterschaltung (2) oder eine Halbbrücken- oder Vollbrückenschaltung (2) zur Bereitstellung einer Versorgungsspannung für das wenigstens eine Leuchtmittel (4), und
- eine Steuerschaltung (3) zur Regelung des Betriebs der Leuchtmittel (4) und/oder Fehlererkennung, wobei der Steuerschaltung (3) an demselben Eingang (SDVLamp / SDVILamp) ein Messsignal, das den Strom durch die Brückenschaltung (2) und/oder ein Messsignal, das den Lampenstrom wiedergibt, und ein Messsignal, das die Spannung über dem wenigstens einen Leuchtmittel (4) wiedergibt, zugeführt werden,
- wobei die zugeführten Messsignale zur Lampenüberwachung dienen,
- wobei die Steuerschaltung (3) dazu ausgelegt ist, die zugeführten Messsignale zur Fehlererkennung und/oder zum Betrieb der Leuchtmittel, insbesondere zum Einstellen eines die Leistung der Leuchtmittel (4) wiedergebenden Parameters auszuwerten,
- wobei ein Fehlerzustand ein Halbbrückenstrom ist, der zum Zeitpunkt des Ausschaltens des potentialniedrigeren Schalters (Q2) der Halbbrücke (2) ansteigt oder in einem unzulässigen Bereich liegt, und
- wobei die Steuerschaltung (3) dazu ausgelegt ist, als Reaktion auf den erkannten Fehlerzustand die Ansteuerfrequenz der wechselweisen Taktung der Schalter (Q1, Q2) der Halbbrücke (2) zu erhöhen, bis kein kapazitiver Betrieb mehr erkannt wird.

11. Schaltung (1) nach Anspruch 10,
bei der die Lampenspannung über einen Widerstandsteiler (R104) erfasst wird.

12. Schaltung nach Anspruch 10 oder 11,
bei der der Halbbrückenstrom über einen Messwiderstand (R102) in Serie zu dem potentialniedrigeren Schalter (Q2) der Halbbrücke (2) erfasst wird.

## Claims

1. A method for operating a least one lighting means (4), such as, for example, an LED, OLED or gas discharge lamp, wherein
- the lighting means (4) is operated based on an inverter circuit (2) or a half bridge or full bridge circuit (2),
- a measurement signal, that represents the current through the bridge circuit and/or a measurement signal, that represents the lamp current, is/are supplied to an input (SDV lamp / SDVI lamp) of the control circuit (3), and
- a measurement signal, that represents the voltage across the at least one lighting means (4), is supplied to the same input of the control circuit (3),
- wherein the supplied measurement signals are used for lamp monitoring,
- wherein the control circuit (3) evaluates the supplied measurement signals for detecting faults and/or for operating the lighting means (4), in particular, for adjusting a parameter representing the output of the lighting means (4),
- wherein a fault condition is a half-bridge current, which increases at the time of the switching off of the lower-potential switch (Q2) of the half bridge (2) or is in an invalid range, and
- wherein the control frequency of the alternating clocking of the switch (Q1, Q2) of the half bridge (2) is increased as a response to the detected fault condition, until no capacitive operation is detected any longer.

2. A method according to Claim 1,
in which when a fault is detected the control circuit (3) outputs a fault signal, which changes the operating mode of the lighting means (4) or switches off the lighting means (4).

3. A method according to Claim 1 or 2,
in which a fault condition is a lamp voltage, which is above a predetermined threshold value.

4. A method according to Claim 3,
in which in the case of an inadmissibly high lamp voltage the control circuit (3) opens the lower-potential switch (Q2) of a half bridge (2) prematurely and/or the frequency of the alternating clocking of the two switches (Q1, Q2) of the half bridge (2) increases.

5. A method according to any one of Claims 1 to 4,
in which a fault condition is a half-bridge current or a lighting means current, which is above a predetermined threshold value.

6. A method according to any one of Claims 1 to 5,
in which a fault condition exists, if the addition of two measured values of the lamp voltage, which are taken at two successive zero crossings of the half-bridge current, produces a value in an invalid range.

7. A control circuit (3), in particular, ASIC, for operating at least one lighting means (4), such as, for example, an LED, OLED or gas discharge lamp, wherein the lighting means (4) is operated based on an inverter circuit (2) or a half bridge or full bridge circuit (2),
- wherein the control circuit has an input and is designed to obtain via this input
- a supplied measurement signal, that represents the current through the bridge circuit and/or a supplied measurement signal, that represents the lamp current, and
- a supplied measurement signal, that represents the voltage across the at least one lighting means (4)
- wherein the supplied measurement signals are used for lamp monitoring,
- wherein the control circuit (3) is designed to evaluate the supplied measurement signals for detecting faults and/or for operating the lighting means, in particular for adjusting a parameter representing the output of the lighting means (4),
- wherein a fault condition is a half-bridge current,
which increases at the time of the switching off of the lower-potential switch (Q2) of the half bridge (2) or is in an invalid range, and
- wherein the control circuit (3) is designed, to increase the control frequency of the alternating clocking of the switch (Q1, Q2) of the half bridge (2) as a response to the detected fault condition, until no capacitive operation is detected any longer.

8. An operating device for lighting means, in particular, for gas discharge lamps, LEDs or OLEDs,
having a control circuit according to Claim 7.

9. A lighting system,
having a control unit and at least one operating device connected with it preferably via a bus line according to Claim 8.

10. A circuit (1) for operating a lighting means,
having
- an inverter circuit (2) or a half bridge or full bridge circuit (2) for providing a supply voltage for the at least one lighting means (4), and
- a control circuit (3) for controlling the operation of the lighting means (4) and/or fault detection,
wherein a measurement signal, that represents the current through the bridge circuit (2) and/or a measurement signal, that represents the lamp current, and a measurement signal, that represents the voltage across the at least one lighting means (4) are supplied to the control circuit (3) at the same input (SDV lamp / SDVI lamp),
- wherein the supplied measurement signals are used for lamp monitoring,
- wherein the control circuit (3) is designed to evaluate the supplied measurement signals for detecting faults and/or for operating the lighting means, in particular, for adjusting a parameter representing the output of the lighting means (4),
- wherein a fault condition is a half bridge current, which increases at the time of the switching off of the lower-potential switch (Q2) of the half bridge (2) or is in an invalid range, and
- wherein the control circuit (3) is designed to increase the control frequency of the alternating clocking of the switch (Q1, Q2) of the half bridge (2) as a response to the detected fault condition, until no capacitive operation is detected any longer.

11. A circuit (1) according to Claim 10,
in which the lamp voltage is detected by means of a resistor divider (R104).

12. A circuit according to Claim 10 or 11,
in which the half bridge current is detected by means of the measurement resistor (R102) in series to the lower-potential switch (Q2) of the half bridge (2).

## Revendications

1. Procédé pour la commande d'au moins un moyen d'éclairage (4), par exemple une LED, une OLED ou une lampe à décharge de gaz,
- le moyen d'éclairage (4) étant commandé à partir d'un circuit onduleur (2) ou d'un circuit à demi-pont ou à pont complet (2),
- un signal de mesure qui reproduit le courant à travers le circuit à pont et/ou un signal de mesure qui reproduit le courant de la lampe étant appliqué(s) à une entrée (SDVLamp / SDVILamp) d'un circuit de commande (3) et
- un signal de mesure, qui reproduit la tension sur l'au moins un moyen d'éclairage (4), étant appliqué à la même entrée du circuit de commande (3),
- les signaux de mesure appliqués permettant de surveiller la lampe,
- le circuit de commande (3) analysant les signaux de mesure appliqués pour la détection d'erreurs et/ou pour la commande des moyens d'éclairage (4), plus particulièrement pour le réglage d'un paramètre reproduisant la puissance des moyens d'éclairage (4),
- un état d'erreur étant un courant de demi-pont qui augmente au moment de l'arrêt du commutateur à bas potentiel (Q2) du demi-pont (2) ou qui se trouve dans une plage inadmissible et
- en tant que réaction à l'état d'erreur, la fréquence de commande du cadencement alterné des commutateurs (Q1, Q2) du demi-pont (2) étant augmentée, jusqu'à ce qu'un fonctionnement capacitif ne soit plus détecté.

2. Procédé selon la revendication 1,
dans lequel le circuit de commande (3) émet, lors d'une détection d'erreur, un signal d'erreur, qui modifie le mode de fonctionnement des moyens d'éclairage (4) ou arrête les moyens d'éclairage (4).

3. Procédé selon la revendication 1 ou 2,
dans lequel un état d'erreur est une tension de lampe qui se trouve au-dessus d'une valeur seuil prédéterminée.

4. Procédé selon la revendication 3,
dans lequel, lors d'une tension de lampe élevée inadmissible, le circuit de commande (3) ouvre prématurément le commutateur à bas potentiel (Q2) d'un demi-pont (2) et/ou augmente la fréquence du cadencement alterné des deux commutateurs (Q1, Q2) du demi-pont (2).

5. Procédé selon l'une des revendications 1 à 4,
dans lequel un état d'erreur est un courant de demi-pont ou un courant de moyen d'éclairage, qui se trouve au-dessus d'une valeur seuil prédéterminée.

6. Procédé selon l'une des revendications 1 à 5,
dans lequel un état d'erreur existe lorsque l'addition de deux valeurs de mesure de la tension de lampe, qui est prise au niveau de deux passages à zéro successifs du courant de demi-pont, donne une valeur dans une plage inadmissible.

7. Circuit de commande (3), plus particulièrement ASIC, pour la commande d'au moins un moyen d'éclairage (4), par exemple une LED, une OLED ou une lampe à décharge de gaz, le moyen d'éclairage (4) étant commandée à partir d'un circuit onduleur (2) ou d'un circuit à demi-pont ou à pont complet (2),
- le circuit de commande comprenant une entrée et étant conçu, par l'intermédiaire de cette entrée,
- pour recevoir un signal de mesure qui reproduit le courant à travers le circuit à pont et/ou un signal de mesure qui reproduit le courant de lampe et
- pour recevoir un signal de mesure qui reproduit la tension sur l'au moins un moyen d'éclairage (4),
- les signaux de mesure appliqués permettant de surveiller la lampe,
- le circuit de commande (3) étant conçu pour analyser les signaux de mesure appliqués pour la détection d'erreurs et/ou pour la commande des moyens d'éclairage, plus particulièrement pour le réglage d'un paramètre reproduisant la puissance des moyens d'éclairage (4),
- un état d'erreur étant un courant de demi-pont qui augmente au moment de l'arrêt du commutateur à bas potentiel (Q2) du demi-pont (2) ou se trouve dans une plage inadmissible et
- le circuit de commande (3) étant conçu, en réaction à l'état d'erreur détecté, la fréquence de commande du cadencement alterné des commutateurs (Q1, Q2) du demi-pont (2) jusqu'à ce qu'un fonctionnement capacitif ne soit plus détecté.

8. Dispositif de commande pour moyens d'éclairage, plus particulièrement pour des lampes à décharge de gaz, des LED ou des OLED,
comprenant un circuit de commande selon la revendication 7.

9. Système d'éclairage,
comprenant une unité de commande et au moins un dispositif de commande selon la revendication 8 relié avec celle-ci par l'intermédiaire d'une ligne de bus.

10. Circuit (1) pour la commande d'un moyen d'éclairage, comprenant
- un circuit onduleur (2) ou un circuit à demi-pont ou à pont complet (2) pour la mise à disposition d'une tension d'alimentation pour l'au moins un moyen d'éclairage (4) et
- un circuit de commande (3) pour la régulation du fonctionnement des moyens d'éclairage (4) et/ou la détection d'erreurs, un signal de mesure, qui reproduit le courant à travers le circuit à pont (2) et/ou un signal de mesure, qui reproduit le courant à travers le circuit à pont (2) et/ou un signal de mesure qui reproduit le courant de lampe, étant appliqué au circuit de commande (3) au niveau de la même entrée (SDVLamp, SDVILamp) et un signal de mesure, qui reproduit la tension à travers l'au moins un moyen d'éclairage (4) étant appliqué,
- les signaux de mesure appliqués permettant de surveiller la lampe,
- le circuit de commande (3) étant conçu pour analyser les signaux de mesure pour la détection d'erreurs et/ou pour la commande des moyens d'éclairage, plus particulièrement pour le réglage d'un paramètre reproduisant la puissance des moyens d'éclairage (4),
- un état d'erreur étant un courant de demi-pont qui augmente au moment de l'arrêt du commutateur à bas potentiel (Q2) du demi-pont (2) ou se trouve dans une plage inadmissible et
- le circuit de commande (3) étant conçu pour augmenter, en réaction à l'état d'erreur détecté, la fréquence de commande du cadencement alterné des commutateurs (Q1, Q2) du demi-pont (2), jusqu'à ce qu'un fonctionnement capacitif ne soit plus détecté.

11. Circuit (1) selon la revendication 10,
dans lequel la tension de lampe est mesurée par l'intermédiaire d'un diviseur à résistances (R104).

12. Circuit selon la revendication 10 ou 11,
dans lequel le courant de demi-pont est mesuré par l'intermédiaire d'une résistance de mesure (R102) en série avec le commutateur bas potentiel (Q2) du demi-pont (2).
